# FASCICULE DE BREVET EUROPEEN

(11) **EP 0 499 756 B1**
(45) Date de publication et mention de la délivrance du brevet: **02.11.1994**
(21) Numéro de dépôt: 91400429.6
(22) Date de dépôt: 18.02.1991
(51) Int. Cl.: B60G 17/052, B60G 17/056

(54) **Système de retour rapide automatique au niveau normal d'utilisation pour suspension pneumatique**
Einrichtung zur schnellen automatischen Wiederherstellung des normalen Betriebsniveaus einer pneumatischen Aufhängung
Device for quickly resetting a pneumatic suspension to normal operating level

(43) Date de publication de la demande: 26.08.1992
(73) Titulaire: S.E.S.R. - SOCIETE EUROPEENNE DE SEMI-REMORQUES, F-75008 Paris (FR)
(72) Inventeur: Detienne, Michel, F-89250 Seignelay (FR)
(74) Mandataire: Michelet, Alain

(56) Documents cités:
- DE-A- 2 932 298
- FR-A- 947 124
- FR-A- 1 213 614
- FR-A- 1 256 371
- FR-A- 1 576 520

## Description

La présente invention concerne un système applicable aux suspensions pneumatiques pour véhicules industriels tels que des camions, des remorques ou des semiremorques. Les systèmes de suspension pneumatique, actuellement mis en oeuvre sur des véhicules industriels, comprennent généralement une paire de soufflets pneumatiques par essieu alimenté par un circuit pneumatique. Le circuit pneumatique comporte une réserve de fluide comprimé et un distributeur de faible débit généralement appelé vanne de nivellement. Le distributeur est constitué par un corps muni d'un organe d'actionnement, l'un étant solidaire de la masse suspendue et l'autre étant solidaire de la masse non suspendue. Le distributeur met les soufflets pneumatiques en communication avec la réserve de fluide comprimé ou avec une vanne d'échappement à faible débit suivant la position de l'organe d'actionnement. Ce distributeur permet d'ajuster le volume et la pression de fluide dans les soufflets pneumatiques en fonction de la charge. Lorsque la charge augmente, par exemple lors du chargement de la remorque, la masse suspendue du véhicule s'affaisse et l'organe d'actionnement du distributeur est entraîné dans une position dans laquelle le soufflet pneumatique est mis en communication avec la réserve d'air comprimée. Inversement, lorsque le véhicule est déchargé, la masse suspendue du véhicule s'écarte de la masse non suspendue et entraîne l'organe d'actionnement dans une position dans laquelle le soufflet pneumatique est mis en communication avec la vanne déchappement à faible débit.

Les systèmes de suspension actuellement connus dans l'état de la technique et correspondant au préambule de la revendication 1 présentent toutefois un inconvénient majeur. En effet, le retour à un niveau normal d'utilisation de la suspension dans le cas d'une variation brutale de l'état de charge est relativement lent et dure en tout cas plusieurs minutes. Ce délai est excessif dans de nombreux cas d'utilisation. En particulier, il arrive que les véhicules industriels effectuent des rotations rapides entre un lieu de chargement et un lieu déchargement, l'opération de chargement ou de déchargement s'effectuant très rapidement en quelques secondes. Généralement, pour éviter des pertes de temps, les conducteurs des véhicules n'attendent pas que la suspension pneumatique est retrouvée son niveau normal d'utilisation, et utilisent donc leur véhicule dans des conditions préjudiciables à la tenue de route et à la durée de vie du matériel, en particulier des suspensions.

De même l'introduction d'un chariot de déchargement provoque un affaissement brutal en raison de l'introduction d'une charge supplémentaire importante. Cet affaissement brutal se traduit par un écrasement des soufflets et des butées de la suspension pneumatique. Inversement, lorsque le chariot porteur extrait une charge du véhicule industriel, la masse suspendue remonte brutalement et provoque un écrasement des butées supérieures.

Il n'est pas possible d'augmenter fortement le débit de la vanne d'échappement et de l'alimention en fluide comprimé pour deux raisons. Tout d'abord l'organe de commande du distributeur est constamment sollicitée lors de l'usage routier, en raison des débattements normaux de la suspension pneumatique. Si le débit de fluide était significatif, la consommation de fluide comprimé serait excessive et impliquerait l'utilisation d'un groupe compresseur de forte puissance. Par ailleurs, un débit de fluide important entraînerait des phénomènes d'oscillation difficilement contrôlables.

On a certes proposé dans l'état de la technique, de résoudre ce problème par un dispositif dit de "montébaisse" utilisable lorsque le véhicule est à l'arrêt afin d'alimenter les soufflets de suspension en air comprimé, ou de les purger et ainsi de modifier la hauteur du châssis du véhicule par rapport à sa position normale de fonctionnement, avant la modification de la charge reposant sur la masse suspendue.

Cette opération nécessite toutefois une intervention manuelle et un contrôle précis du moment de déclenchement, et de l'importance du volume de fluide comprimé à introduire ou extraire des soufflets pneumatiques.

L'objet de la présente invention est de remédier à ces inconvénients en proposant un système de régulation d'une suspension pneumatique pour véhicule à charge variable comportant des moyens d'ajustage rapides et automatiques du niveau de la masse suspendue lors des variations brutales de charge. Ces moyens n'interferront pas avec le fonctionnement de la suspension lors de l'usage routier normal.

A cet effet, le système de suspension selon la présente invention comporte les caractéristiques telles que définies dans la revendication 1.

Dans la présente description, il faut entendre par
- "fort débit" un débit de fluide au moins trois fois supérieur au "faible débit" de fluide mis en oeuvre dans les moyens de régulation du volume de fluide dans les soufflets pneumatiques, conformément à l'enseignement de l'état de la technique.
- "débattement positif": distance entre la masse suspendue et la masse non suspendue supérieure à la distance d'équilibre ; on parlera de débattement positif lorsque le châssis du véhicule industriel s'élève.
- "débattement négatif" : distance entre la masse suspendue et la masse non suspendue inférieure à la distance d'équilibre. On parlera de débattement négatif lorsque le châssis du véhicule industriel s'affaisse.

Lorsque le véhicule industriel est en usage routier normal, les moyens de mise en communication des soufflets avec le circuit à fort débit sont inactifs. L'ajustage du volume de fluide dans les soufflets pneumatiques est dû uniquement aux circuits à faible débit et à la vanne de nivellement habituellement mise en oeuvre sur ce genre de véhicule. La consommation de fluide comprimé est donc faible, et le système de suspension n'entre pas en oscillation.

Par contre, lorsqu'une charge est brutalement retirée du véhicule, le débattement devient supérieur au débattement habituel, et le circuit à fort débit entre en action pour ajuster rapidement le niveau du véhicule évitant ainsi une venue en butée.

Le système de suspension peut être actif à la fois pour le chargement et pour le déchargement, ou seulement pour l'une de ces actions, selon l'utilisation pour laquelle le véhicule est destiné.

Selon un premier mode de réalisation, le système de suspension comporte un distributeur à fort débit muni d'un organe d'actionnement, solidaire l'un de la masse suspendue, l'autre de la masse non suspendue, l'organe d'actionnement assure la mise en communication du soufflet pneumatique avec le circuit de fluide comprimé à fort débit lorsque le débattement est supérieur au débattement négatif maximum en usage normal et avec une vanne d'échappement à fort débit lorsque le débattement est supérieur au débattement positif maximum.

Avantageusement, l'organe d'actionnement est constitué par un bras ramené en position neutre par des moyens élastiques, ce bras coopérant avec un organe de liaison lorsque le débattement entre la masse suspendue et la masse non suspendue dépasse le débattement en usage normal.

Par contre, lorsque le débattement est inférieur au débattement maximum, le bras ne coopère pas avec l'organe de liaison.

De préférence, l'organe de liaison coopère avec le bras par l'intermédiaire de galets.

Selon un mode de réalisation avantageux, l'extrémité du bras opposé au distributeur est articulé avec une bielle dont l'autre extrémité est articulée avec une lame déformable élastiquement sensiblement parallèle audit bras. L'extrémité de cette lame élastique opposée à la bielle est fixe. L'ensemble formé par le bras du distributeur, la bielle, et la lame élastique forme un parallélogramme déformable.

Selon un deuxième mode de réalisation, le système de suspension comporte des distributeurs rotatifs à faible débit, muni d'un levier solidaire l'un de la masse suspendue, l'autre de la masse non suspendue. Ce distributeur rotatif alimente un distributeur à tiroir à gros débit mettant le soufflet pneumatique en communication soit avec une vanne d'échappement, soit avec le circuit de fluide comprimé à fort débit, soit en position neutre.

D'autres avantages et modes de réalisation ressortiront mieux de la description qui va suivre, s'appuyant sur les dessins où :
- la figure 1 représente une vue schématique de face du système de régulation en position utilisation routière normale,
- la figure 2 représente une vue schématique du système en position de débattement négatif,
- la figure 3 représente une vue schématique du système en position de débattement positif,
- la figure 4 représente une vue de face d'un deuxième mode de réalisation de l'invention.

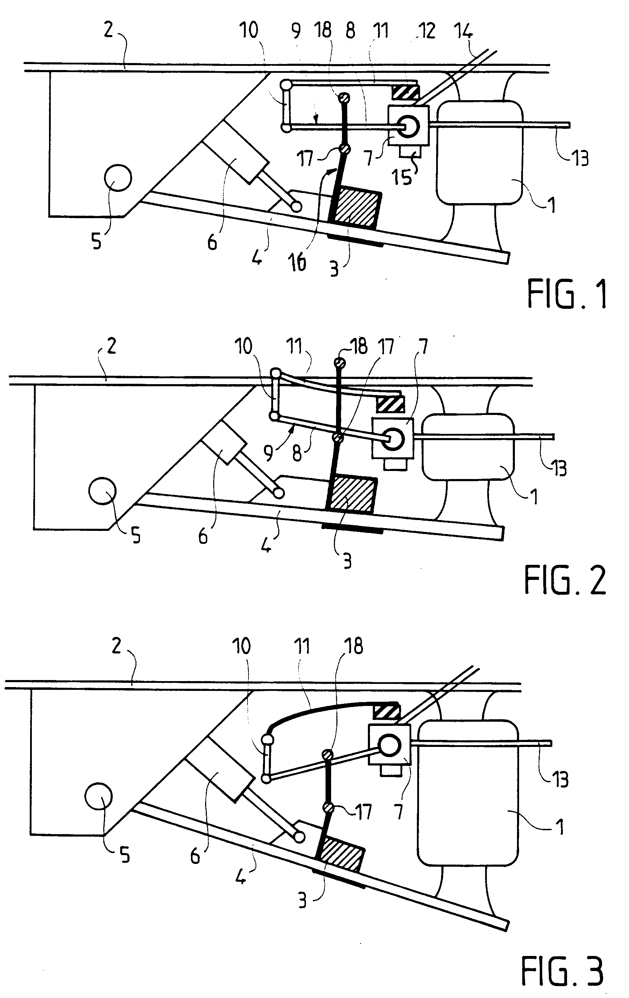

On a représenté sur les figures 1 à 3 le schéma simplifié d'un système de suspension selon l'invention. Le système comporte tout d'abord, de façon connue, un soufflet pneumatique (1) réunissant le châssis (2) du véhicule, constituant la masse suspendue, à l'essieu (3) constituant la masse non suspendue par l'intermédiaire du bras (4). Ce bras (4) supportant l'essieu (3) et articulé par rapport à un châssis de façon connue par l'intermédiaire d'un axe de pivotement (5). Le système de suspension intègre également de façon connue un amortisseur (6) . Par ailleurs le système comporte un premier distributeur rotatif solidaire du châssis dont le bras de commande est articulé de façon solidaire avec la masse non suspendue. Ce distributeur rotatif assure l'arrivée de fluide comprimé à faible débit dans le soufflet pneumatique (1) dès que le châssis s'affaisse par rapport à la position d'équilibre. Lorsque le châssis s'écarte de sa position d'équilibre dans le sens positif, le distributeur de type connu met en relation le soufflet pneumatique avec une vanne d'échappement à faible débit. Ce distributeur rotatif de type connu est activé indépendamment de l'amplitude des débattements, et fonction en tout-ou-rien, dès que le débattement s'écarte de la position d'équilibre.

Selon l'invention, le système de suspension comporte en outre un distributeur rotatif à fort débit (7) dont l'organe de commande est constitué par un bras (8). Ce bras (8) est articulé à l'extrémité (9) opposée au distributeur rotatif (7) avec une biellette (10) elle-même articulée avec une lame déformable élastiquement (11). Cette lame (11) est fixée à son extrémité (12) opposée à la bielle (10) de façon solidaire avec le châssis (2). Le bras (8), la bielle (10) et la lame souple (11) forment ainsi un parallélogramme déformable. La lame élastique (11) impose, en l'absence de contrainte, le retour du bras de commande (8) du distributeur rotatif (7) en position neutre. Par position neutre on entend la position dans laquelle ce distributeur rotatif ne met le soufflet pneumatique (1) en liaison ni avec le circuit de fluide comprimé, ni avec la vanne d'échappement. Le distributeur rotatif (7) comporte de façon classique une arrivée d'air comprimé (13), une sortie d'air comprimé à fort débit (14) ainsi qu'une vanne d'échappement (15) permettant de mettre le soufflet pneumatique (1) en communication avec l'atmosphère.

Une tige de liaison (16) est fixée sur le support d'essieu (3). Cette tige de liaison (16) comporte une butée inférieure (17) et une butée supérieure (18) constituée par des galets libres en rotation sur un axe transversal. Tant que le débattement de l'essieu (3) reste dans la fourchette d'amplitude correspondant à un usage routier, la tige de liaison (16) se déplace verticalement vers le haut ou vers le bas sans que la butée inférieure (17) ou la butée supérieure (18) ne vienne en contact avec le bras (8) du distributeur rotatif.

Par contre lorsque, comme représenté en figure 2, le débattement de la masse suspendue par rapport à la masse non suspendue devient supérieur au débattement négatif maximum en usage routier normal, la butée inférieure (17) entre en contact avec le bras (8) du distributeur rotatif (7) . Le distributeur rotatif (7) à fort débit met alors le soufflet pneumatique (1) en communication avec l'arrivée de fluide comprimé à fort débit (13). Cela provoque un gonflement du soufflet pneumatique (1), qui a tendance à augmenter dans le sens positif le débattement, jusqu'à ce que la butée inférieure (17) perde le contact avec le bras (8) du distributeur rotatif (7). A ce moment, le bras se retrouve en position neutre, sous l'action de la lame souple (11) et la communication entre le soufflet pneumatique (1) et l'arrivée de fluide à fort débit (13) est interrompue. La suspension retrouve alors le fonctionnement normal tel qu'il est connu dans l'état de la technique.

Par contre, lorsque comme représenté en figure 3, le débattement de l'essieu dépasse le débattement positif maximum, la butée supérieure (18) vient en contact avec le bras (8) du distributeur rotatif (7), et l'entraîne vers le bas, dans une position dans laquelle le distributeur rotatif (7) met en communication le soufflet pneumatique (1) avec l'atmosphère par l'intermédiaire d'une vanne d'échappement à fort débit (15). La mise en communication du soufflet pneumatique (1) avec l'atmosphère par l'intermédiaire de la vanne d'échappement (15) à fort débit provoque une chute de la pression à l'intérieur du soufflet pneumatique (1) et donc la masse suspendue du véhicule s'affaisse jusqu'à retrouver une position comprise dans les limites du débattement en usage routier normal.

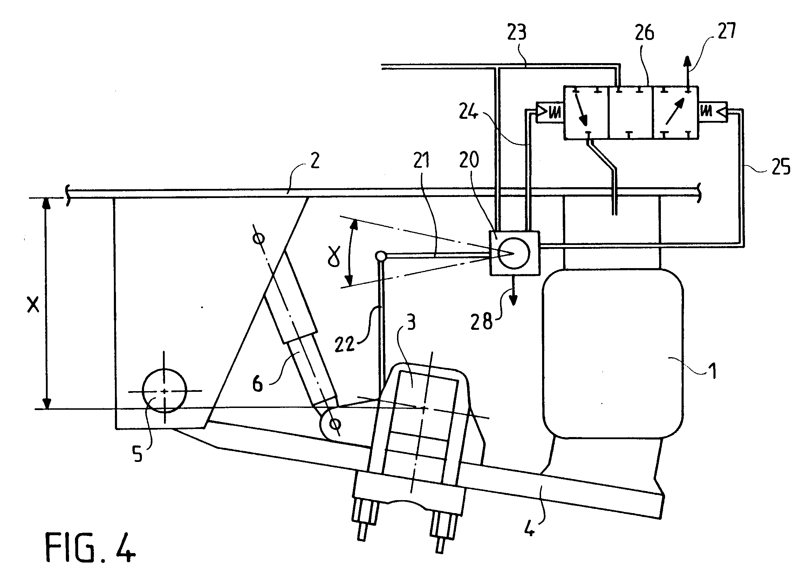

La figure 4 représente une vue schématique d'un autre mode de réalisation de l'invention.

Ce système met en oeuvre un distributeur rotatif (20) à faible débit muni d'un levier (21) relié à l'essieu (3) par l'intermédiaire d'une tige de liaison (22) . Le distributeur rotatif (20) comporte un angle mort alpha autour de sa position médiane. Cet angle mort alpha correspond au débattement dynamique de la suspension en usage routier normal.

Ce distributeur rotatif est alimenté en fluide comprimé par une conduite (23). Le distributeur rotatif (20) comporte une première sortie (24) et une deuxième sortie (25) activée en fonction de la position du levier (21). Les deux sorties (24, 25) commandent le distributeur à tiroir (26). Ce distributeur à tiroir (26) est connecté au circuit d'alimentation en fluide comprimé. Il assure la liaison à fort débit du soufflet pneumatique (1) avec la source de fluide comprimée ou avec une vanne d'échappement (27) à fort débit suivant la position du distributeur rotatif (20). Le distributeur à tiroir (26) comporte des moyens de retour en position neutre lorsqu'aucune des sorties (24, 25) ne sont activées.

Le fonctionnement du système de suspension suivant ce deuxième mode de réalisation est sensiblement identique à ce qui a déjà été exposé. Lors d'une augmentation rapide de la charge sur le véhicule industriel la masse suspendue (2) et l'essieu (3) se rapprochent. La tige de liaison (22) repousse le levier (21) du distributeur rotatif (20). Lorsque le levier (21) forme un angle supérieur à l'angle correspondant à la course dynamique et au débattement en usage nominal, le distributeur rotatif met en communication le circuit de fluide comprimé avec la sortie (25), tout en conservant la sortie (24) en communication avec l'atmosphère par l'intermédiaire d'une vanne d'échappement (28). La sortie (25) pilote le distributeur à tiroir (26) qui met en liaison le soufflet pneumatique (1) avec la source de fluide comprimé. De ce fait, le soufflet pneumatique (1) se gonfle. La pression augmente et la distance entre le châssis (2) et l'essieu (3) se rétablit jusqu'au retour du distributeur rotatif (20) en position neutre dans laquelle ni la sortie (24), ni la sortie (25) n'agit sur le distributeur à tiroir (26).

Sous une diminution rapide de la charge, le distributeur rotatif à faible débit (20) pilote le distributeur à tiroir (26) à fort débit et provoque la mise à l'air du soufflet de suspension (1) qui se dégonfle jusqu'au retour du levier (21) en position neutre dans laquelle les sorties (24, 25) sont mises en échappement, et cessent leur action sur le distributeur à tiroir (26).

Dans ce qui précède, les modes de réalisation ont été décrits à titre d'exemples non limitatifs.

Il est bien entendu que l'invention peut être réalisée sous de nombreuses autres formes sans autant sortir du cadre de la protection comme défini dans les revendications.

En particulier, le pilotage du distributeur à tiroir peut être réalisé par de nombreux moyens connus dans l'état de l'art : capteur électrique, capteur mécanique, sous de nombreuses formes que l'homme du métier peut déterminer à partir de ses compétences normales.

De même, le distributeur rotatif peut être remplacé par tous autres moyens connus dans l'état de l'art, et en particulier, il est envisageable d'utiliser un distributeur unique multi-voix pour la régulation à faible débit et pour la commande d'un distributeur à tiroir à fort débit.

## Revendications

1. Système de régulation de suspension pneumatique pour véhicule à charge variable, comportant un circuit pneumatique alimentant au moins un soufflet pnematique (1) disposé entre l'essieu (3) et le châssis (2), ledit circuit comportant un distributeur dont le corps et l'organe d'actionnement sont solidaires l'un de la masse suspendue, l'autre de la masse non suspendue, ledit distributeur mettant les soufflets pneumatiques (1) en communication avec la réserve de fluide comprimé ou avec une vanne d'échappement à faible débit suivant la position de l'organe d'actionnement, caractérisé en ce qu'il comporte en outre un moyen (7; 20, 26) de mise en communication du soufflet (1) avec un circuit de fluide comprimé à fort débit (13; 23) lorsque la distance entre la masse suspendue et la masse non suspendue dépasse sa valeur minimale en usage normal, et/ou en communication avec une vanne d'échappement à fort débit (15; 27) lorsque la distance entre la masse suspendue et la masse non suspendue dépasse sa valeur maximale en usage normal.

2. Système de régulation de suspension pneumatique selon la revendication 1, caractérisé en ce qu'il comporte un distributeur rotatif (7) à fort débit muni d'un organe d'actionnement (8), solidaire l'un de la masse suspendue, l'autre de la masse non suspendue, l'organe d'actionnement (8) commandant la mise en communication du soufflet (1) avec le circuit de fluide comprimé à fort débit lorsque la distance entre la masse suspendue et la masse non suspendue dépasse sa valeur minimale en usage normal, et la mise en communication du soufflet (1) avec une vanne d'échappement (15) à fort débit lorsque ladite distance dépasse sa valeur maximale en usage normal.

3. Système de régulation de suspension pneumatique selon la revendication 2, caractérisé en ce que le distributeur rotatif à fort débit (7) comporte un organe d'actionnement (8) constitué par un bras ramené en position neutre par des moyens élastiques, ledit bras coopérant avec un organe de liaison (16) uniquement lorsque la distance entre la masse suspendue et la masse non suspendue dépasse lesdites valeurs maximale et minimale en usage normal.

4. Système de régulation de suspension pneumatique suivant la revendication 3, caractérisé en ce que l'organe de liaison est constitué par une tige (16) munie d'une butée inférieure (17) et d'une butée supérieure (18), ces butées étant constituées par des galets montés libres en rotation autour d'un axe transversal.

5. Système de régulation de suspension pneumatique suivant l'une quelconque des revendications 2 à 4, caractérisé en ce que le bras (8) du distributeur rotatif (7) est articulé à l'extrémité opposée au distributeur rotatif (7) avec une bielle (10) articulée elle-même avec une lame déformable élastiquement (11), munie d'une extrémité fixe (12), l'ensemble constitué par le bras (8), la bielle (10), et la tige flexible (11), constituant un parallélogramme déformable.

6. Système de régulation de suspension pneumatique suivant la revendication 1, caractérisé en ce qu'il comporte un distributeur rotatif à faible débit (20) muni d'un organe d'actionnement (21) solidaire l'un de la masse suspendue l'autre de la masse non suspendue, ledit distributeur à faible débit (20) comportant une première sortie de fluide comprimé (24) et une deuxième sortie de fluide comprimé (25) pilotant un distributeur à tiroir gros débit (26) lorsque la position de l'organe d'actionnement (21) sort de la plage balayée lors du débattement dynamique en usage normal.

## Claims

1. System for regulating a pneumatic suspension for a vehicle with a variable load, including a pneumatic circuit supplying at least one pneumatic bellows (1) disposed between the axle (3) and the chassis (2), the said circuit including a directional control valve, the body and actuating member of which are fixed one to the sprung mass and the other to the unsprung mass, the said directional control valve putting the pneumatic bellows (1) in communication with the compressed fluid reservoir or with a low-output exhaust valve depending on the position of the actuating member, characterised in that it also includes a means (7; 20, 26) for putting the bellows (1) in communication with a high-output compressed-fluid circuit (13; 23) when the distance between the sprung mass and unsprung mass exceeds its minimum value in normal use, and/or in communication with a high-output exhaust valve (15; 27) when the distance between the sprung mass and unsprung mass exceeds its maximum value in normal use.

2. System for regulating a pneumatic suspension according to Claim 1, characterised in that it includes a high-output rotary directional control value (7) fitted with an actuating member (8), one being fixed to the sprung mass and the other to the unsprung mass, the actuating member (8) causing the bellows (1) to be put in communication with the high-output compressed-fluid circuit when the distance between the sprung mass and unsprung mass exceeds its minimum value in normal use, and causing the bellows (1) to be put in communication with a high-output exhaust value (15) when the said distance exceeds its maximum value in normal use.

3. System for regulating a pneumatic suspension according to Claim 2, characterised in that the high-output rotary directional control valve (7) has an actuating member (8) consisting of an arm returned to the neutral position by elastic means, the said arm cooperating with a connecting member (16) only when the distance between the sprung mass and unsprung mass exceeds the said maximum and minimum values in normal use.

4. System for regulating a pneumatic suspension according to Claim 3, characterised in that the connecting member consists of a rod (16) fitted with a lower stop (17) and an upper stop (18), these stops consisting of rollers mounted so as to rotate freely about a transverse axis.

5. System for regulating a pneumatic suspension according to any one of Claims 2 to 4, characterised in that the arm (8) of the rotary directional control valve (7) is articulated, at the opposite end to the rotary directional control valve (7), on a connecting rod (10) itself articulated on an elastically deformable blade (11) with a fixed end (12), the assembly consisting of the arm (8), connecting rod (10) and flexible rod (11) constituting a deformable parallelogram.

6. System for regulating a pneumatic suspension according to Claim 1, characterised in that it includes a low-output rotary directional control valve (20) fitted with an actuating member (21) fixed one to the sprung mass and the other to the unsprung mass, the said low-output directional control valve (20) having a first compressed-fluid outlet (24) and a second compressed-fluid outlet (25) controlling a very high output directional spool valve (26) when the position of the actuating member (21) leaves the range swept during dynamic movement in normal use.

## Patentansprüche

1. System zur Regelung der pneumatischen Aufhängung für ein Fahrzeug mit veränderlicher Last mit einem Pneumatikkreis, der wenigstens einen Pneumatikbalg (1) speist, der zwischen der Achse (3) und dem Fahrgestell (2) angeordnet ist, wobei der besagte Kreis einen Verteiler aufweist, dessen Grundkörper und dessen Betätigungsorgan einerseits mit der aufgehängten Masse und andererseits mit der nicht aufgehängten Masse ein Teil bildet, wobei der besagte Verteiler die Pneumatikbälge (1) entsprechend der Position des Betätigungsorgans mit dem Vorrat des komprimierten Fluids oder mit einem Auslaßventil mit geringem Durchsatz in Verbindung bringt, dadurch gekennzeichnet, daß es außerdem eine Einrichtung (7; 20, 26) aufweist, um den Balg (1) mit einem Kreis komprimierten Fluids mit großem Durchsatz (13; 23) in Verbindung zu bringen, wenn der Abstand zwischen der aufgehängten Masse und der nicht aufgehängten Masse seinen Minimalwert bei normalem Einsatz überschreitet, und/oder in Verbindung mit einen Auslaßventil mit großem Durchsatz (15; 27), und wenn der Abstand zwischen der aufgehängten Masse und der nicht aufgehängten Masse seinen Maxiamlwert bei normalen Einsatz überschreitet.

2. System zur Regelung einer pneumatischen Aufhängung nach Anspruch 1, dadurch gekennzeichnet, daß es einen Drehverteiler (7) mit großem Durchsatz aufweist, der mit einem Betätigungsorgan (8) versehen ist, wobei das eine Teil mit der aufgehängten Masse und das andere mit der nicht aufgehängten Masse ein Teil bildet, und wobei das Betätigungsorgan (8) das Herstellen der Verbindung zwischem dem Balg (1) und dem Kreis komprimierten Fluids mit großem Durchsatz ansteuert, sobald der Abstand zwischen der aufgehängten Masse und der nicht aufgehängten Masse seinen Minimalwert im normalen Einsatz überschreitet, und das Herstellen einer Verbindung zwischen dem Balg (1) und einem Auslaßventil (15) mit großem Durchsatz, wenn der besagte Abstand seinen Maximalwert im normalen Einsatz überschreitet.

3. System zur Regelung einer pneumatischen Aufhängung nach Anspruch 2, dadurch gekennzeichnet, daß der Drehverteiler mit großem Durchsatz (7) ein Betätigungsorgan (8) aufweist, das aus einem Arm besteht, der durch elastische Mittel in seine Neutralstellung zurückgeführt wird, wobei der besagte Arm mit einem Verbindungsorgan (16) ausschließlich dann zusammenwirkt, wenn der Abstand zwischen der aufgehängten Masse und der nicht aufgehängten Masse die besagten Maximal- und Minimalwerte im normalen Einsatz überschreitet.

4. System zur Regelung einer pneumatischen Aufhängung nach Anspruch 3, dadurch gekennzeichnet, daß das Verbindungsorgan aus einem Schaft (16) besteht, der mit einem unteren (17) und einem oberen Anschlag (18) versehen ist, wobei diese Anschläge aus Rollen bestehen, die zur freien Drehung um eine Querachse gehalten sind.

5. System zur Regelung einer pneumatischen Aufhängung nach einem der Ansprüche 2 bis 4, dadurch gekennzeichnet, daß der Arm (8) des Drehverteilers (7) am dem Drehverteiler (7) gegenüberliegenden Endabschnitt an eine Koppelstange (10) angelenkt ist, die wiederum an eine elastisch verformbare Zunge (11) angelenkt ist, welche einen ortsfesten Endabschnitt (12) aufweist, wobei die aus dem Arm (8), der Koppelstange (10) und der flexiblen Zunge (11) bestehende Einheit ein verformbares Parallelogramm bildet.

6. System zur Regelung einer pneumatischen Aufhängung nach Anspruch 1, dadurch gekennzeichnet, daß es einen Drehverteiler mit geringem Durchsatz (20) aufweist, der mit einem Betätigungsorgan (21) versehen ist, wobei eines der Teile mit der aufgehängten Masse und das andere mit der nicht aufgehängten Masse ein Teil bildet, wobei der besagte Verteiler mit geringem Durchsatz (20) einen ersten Auslaß für komprimiertes Fluid (24) und einen zweiten Auslaß für komprimiertes Fluid (25), die einen Schiebeverteiler mit großem Durchsatz (26) steuern, wenn die Position des Betätigungsorgans (21) den bei dynamischer Durchfederung bei normalem Einsatz überstrichenen Bereich verläßt.
